# EUROPEAN PATENT APPLICATION

(11) **EP 4 147 763 A1**
(43) Date of publication of application: **15.03.2023**
(21) Application number: 21799455.7
(22) Date of filing: 13.04.2021
(51) Int. Cl.: B01D 24/16, B01D 27/02

(54) **FILTER MODULE**

(30) Priority: 04.05.2020 RU 2020115348
(71) Applicant: Electrophor, Inc., Oakland Park, FL 33334-4210 (US)
(72) Inventor: SHMIDT, Jozeph L., New York, 11598 (US); RUSINOV, Gleb Dmitrievich, Saint-Petersburg, 198302 (RU); CHERNYJ, Alexander Alexandrovich, Saint-Peterburg, 195252 (RU); SURZHENKO, Dmitriy Andreevich, Saint-Peterburg, 195253 (RU)
(74) Representative: Danubia Patent & Law Office LLC
(86) International application number: PCT/RU2021/000157
(87) International publication number: WO 2021/225470

(57) **Abstract**

The claimed invention relates to replacement filtration elements for liquid purification devices of different type, including liquid purification devices of gravity type, and liquid purification units of beverage preparation systems, for example dispensers or coffee machines.

A filtration cartridge that comprises a body with raw water inlets made in its basement, filled with a filtration material with a purified water tube inside, connected to a purified water outlet, made in a central part of the body, characterized in that the filtration cartridge is equipped with redistribution means of raw water flows.

## Description

The claimed invention relates to replacement filtration elements for liquid purification devices of different type, including liquid purification devices of gravity type, and liquid purification units of beverage preparation systems, for example dispensers or coffee machines.

Filtration cartridge of the application US 2008/0121581 (applicant Brita GmbH, priority 13.10.2004, IPC B01D 24/10) is known from the state of the art. Filtration cartridge comprises the outer body with inserted inner body. Space of in the inner body forms the outflow chamber, and the space between the outer side wall of the of the inner body and inner side wall of the outer body forms the down-current chamber. Both chambers are filled with filtration material. The space in the upper part of the outer body forms the connecting chamber. Outlet openings for purified liquid, equipped with the mesh are made in the basement of the down-current chamber. Inlet openings of the outflow chamber made as circular channel are made in the basement of the outflow chamber. The indicated circular channel is formed by the wall going down from the center and attached to side walls of the outer body and outer wall of the inner body.

Filtration cartridge from the US application 2008/0121581 works as follows. Filtration cartridge is installed into the liquid storage vessel of the coffee machine. The raw water through the inlet opening flows in the outflow chamber of the filtration cartridge and through connecting chamber flows into the down-current chamber, therein water flows through filtration material of the chambers. Purified liquid flows out of the purified liquid outlet opening and then goes into the coffee making unit.

The main drawback of the filtration cartridge of US application 2008/0121581 is that the raw liquid channel is too narrow with few openings for raw liquid. So, the raw liquid flow is not distributed. Only a part of filtration material, existing in the cartridge operates during liquid purification process, and that is ineffective. Also, air bubbles can be present in the filtration material. If the air bubble forms near the raw liquid channel, therefore it decreases or blocks liquid filtration process, thus decreasing working capacity of filtration cartridge.

Filtration cartridge of the US application 2011/0232500 (applicant Nestec S. A., priority 25.09.2008, IPC A47J 31/06, B01D 27/00, A47J 31/46) is known from the state of the art. The filtration cartridge comprises a body filled with filtration material. Raw liquid inlet openings are made in the basement of the cartridge. The tube for purified liquid is installed inside the body with filtration material. The tube for purified liquid has two sections - horizontal and vertical. Vertical section is connected to outlet opening for purified liquid. The horizontal section has inlet openings for the purified liquid equipped with the net. Vertical section is made with additional channel with the opening for the raw liquid, equipped with the net.

Filtration cartridge of US application US2011/0232500 operates as follows Filtration cartridge is installed into the mounting seat of the raw liquid storage vessel of the coffee machine. Raw liquid flows into filtration cartridge through raw water inlet openings. After filtration a portion of water flows through the openings of the additional channel into the vertical section of the tube lower than additional channel level and goes to the purified water outlet. The rest portion of the liquid rises through filtration material and outlets, made in horizontal section of the tube, goes inside the tube, and then flows into the horizontal section and through purified liquid outlet flows from the cartridge into the coffee preparation unit.

The main drawback of the filtration cartridge US application US2012/0232500 is that the purification rate of two different flows is different - the quick (not effective) and the slow (effective) liquid purification takes place. So, the liquid purification rate within the cartridge is not uniform (as two flows mix). This decreases the capacity of coffee making unit and the properties of the purified. Also, filtration cartridge US application 2011/0232500 has mesh on the inlet openings of the purified liquid tube. They catch the impurities or filtration material particles after quick filtration. Within time the impurities accumulate on the nets surface and their permeability decreases. So, the durability of cartridge is determined not by depletion degree of the filtration material, but by the time, when the mesh is blocked by impurities.

The filtration cartridge from a patent RU 2195356 (applicant Aquaphor Inc, priority 01.06.2001, IPC B01D 35/01, B01D 24/16, B01D 27/02, B01D 101/02), and chosen by the applicant as the closest analogue is known from the state of the art. Filtration cartridge of a patent RU 2195356 comprises a body, filled with filtration material. Raw liquid inlets are made in the basement of the filtration cartridge symmetrically from the central axis. The purified liquid opening with the purified liquid tube inside is made on the central axis of filtration cartridge. The airtight cavity for purified liquid flowing out of the filtration material layer is arranged in the upper part of the filtration cartridge. The purified liquid tube is connected to the indicated airtight cavity. Also, the purified liquid tube is equipped with the jet to regulate water purification.

Filtration cartridge from a patent RU 2195356 works as follows. Filtration cartridge is inserted into the raw liquid storage vessel of the liquid purification device. The raw liquid through the holes made in the filtration cartridge bottom passes by gravity through the filter material, collects in a sealed cavity and flows through the purified liquid tube into the purified liquid tank of the water purification device and further for consumption.

Filtration cartridge from a patent RU 2195356 has the main drawback - the jet in the purified liquid tube. The jet is made as the opening with the diameter less than the size of filtration material particles and is intended for air removal from the filtration material. As the diameter of the jet is too small the air bubble will flow very slowly and so the water filtration velocity will decrease. Also, as the air removal from the filtration material goes slowly, the part of the filtration material will be blocked by air bubbles, which decreases the effectiveness of the filtration material utilization during liquid purification process.

Object of the invention and the technical result achieved when using the invention is the development of a new filtration cartridge with increased effective volume (ratio between volume of filtration material taking part in filtration process to the total filtration material volume), and simultaneous increase of water purification effectiveness.

Problem to be solved and technical result are achieved by a filtration cartridge that comprises a body with raw water inlets made in its basement, filled with a filtration material with a purified water tube inside, connected to a purified water outlet, made in a central part of the body, characterized in that the filtration cartridge is equipped with redistribution means of raw water flows which may be made as a frame of circular section equipped with stiffening ribs that divide the frame into sections. Therein the filtration material comprises at least two sorbent types and the sorbents may be placed in layers or mixed.

Disclosure of the invention is clarified by the figures.
Figure 1 discloses an example of filtration cartridge construction.
Figure 2 discloses an example of filtration cartridge lower part.

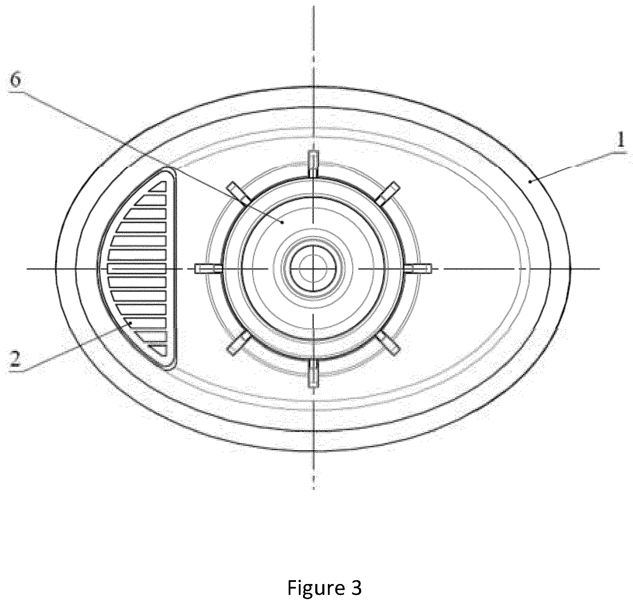

Figure 3 discloses an example of filtration cartridge basement.

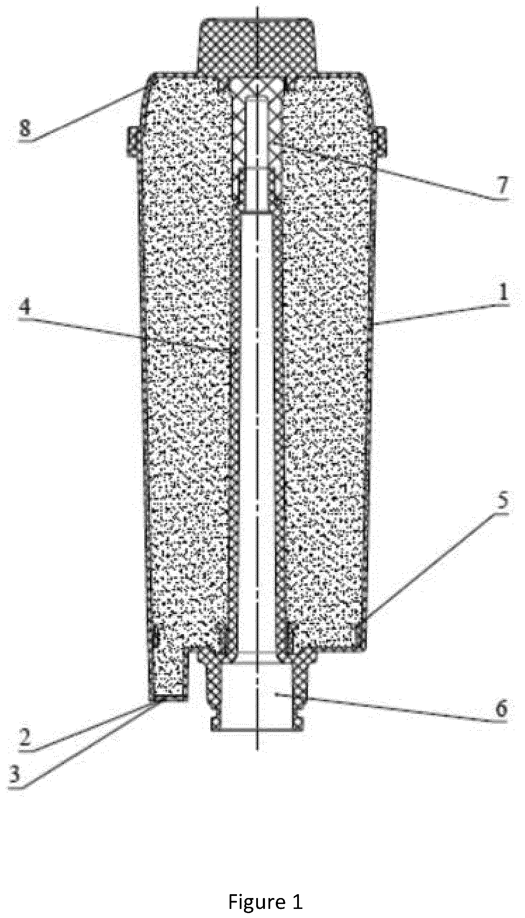

Filtration cartridge (figure. 1) comprises the body 1, filled with filtration material 3, and the tube 4, placed inside the body 1. Tube 4 may be made as one detail with the purified liquid outlet 6 or be a separate detail, which is installed into the body (nor shown). Raw liquid inlet openings 2 and purified liquid outlet 6 are made in the bottom of the body 1. The flow redistribution means 5 is made inside the body 1 (Figure 1).

Body 1, a lid 8, tube 4, and flow redistribution means 5 are made of polymeric materials, for example, polyolefins, for example, but not limited to polypropylene, polyethylene or polystyrene.

Filtration material 3 contains at least two sorbents of different hydrophilic properties and particle size, for example, but not limited to activated carbon, activated carbon fiber, ion exchange resins and ion exchange fibers. Sorbents can be mixed or be placed layer by layer.

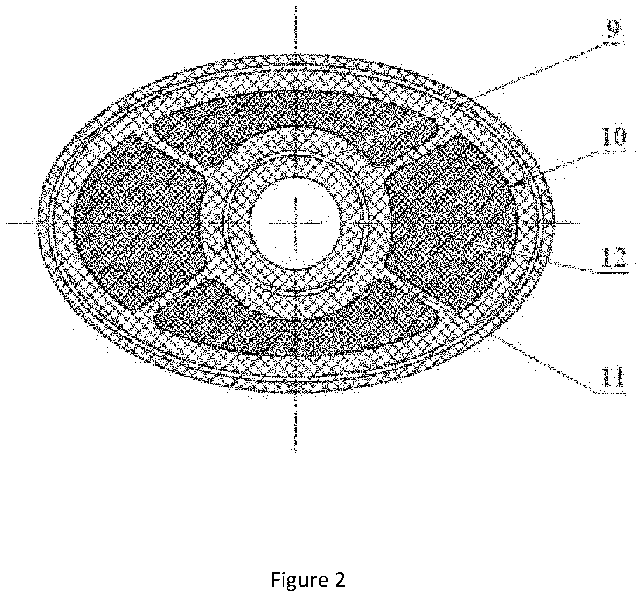

Flow redistribution means 5 may be made as a frame 9, divided into sections by the stiffening ribs. Additionally, each section may be equipped with, for example, but not limited to with the mesh 12 or spun bond (not shown). Flow redistribution means 5 may be made near the bottom of the tube 4 (Figures 1 and 2) or may be placed on 1/3 from the height of the body from the bottom (not shown). Therefore, the flow redistribution means 5 may serve as the fixation means of one of the filtration material 3 layers.

The filtration cartridge body 1 is closed with the lid 8 from above (Figure 1).

The tube 4 for water purification is equipped with the postfilter 7 (Figure 1), made as, for example, but not limited to sintered polyolefins, for example polyethylene or polypropylene, carbon fiber of carbon block.

Within the scope of the distinguishing features the filtration cartridge works as follows. Filtration cartridge is inserted in the raw liquid storage vessel of the liquid purification device or beverages preparation device. Raw liquid through inlet openings 2 flows into the filtration cartridge. Due to the flow distribution means 5 raw liquid evenly distributes in the volume of the filtration material 3 in the body 1, and rises up, purifying while flowing through the sorbents. Purified liquid through the postfilter 7 (when included) or through the opening flows into the purified liquid tube 4 and flows through the outlet opening 6. Further purified liquid flows into the purified liquid storage vessel of the liquid purification device or into the beverage preparation unit of the beverage preparation device, for example of coffee machine.

The flows redistribution means 5 as well as the difference in the particle size and hydrophilic properties of the sorbents of the filtration material 3 provides effective utilization of the most part of the filtration material 3 so its effective volume increases too. Besides, opposed to the closest analogue liquid filtration is done quicker and more even, therefore due to that filtration material contains of at least two sorbents the water purification degree increases.

The description of the present invention submits a preferred embodiment of the invention. It can be changed within the claimed set of the claims, so the wide use of the invention is possible.

## Claims

1. A filtration cartridge, comprising a body with raw water inlets made in its basement, filled with a filtration material with a purified water tube inside, connected to a purified water outlet, made in a central part of the body, **characterized in that** the filtration cartridge is equipped with redistribution means of raw water flows.

2. The filtration cartridge according to the claim 1, **characterized in that** the redistribution means of raw water flows may be made as a frame of circular section equipped with stiffening ribs that divide the frame into sections.

3. The filtration cartridge according to the claim 1, **characterized in that** the filtration material comprises at least two sorbent types.

4. The filtration cartridge according to the claim 3, **characterized in that** the sorbents may be placed in layers.

5. The filtration cartridge according to the claim 3, **characterized in that** the sorbents may be mixed.
